# EUROPEAN PATENT SPECIFICATION

(11) **EP 2 534 861 B1**
(45) Date of publication and mention of the grant of the patent: **20.04.2016**
(21) Application number: 11705808.1
(22) Date of filing: 08.02.2011
(51) Int. Cl.: H04W 8/06, H04W 76/02

(54) **METHOD AND MOBILE TERMINAL DEVICE FOR SUPPORTING MULTIPLE SIMULTANEOUS PDN CONNECTIONS TO THE SAME APN**
VERFAHREN UND MOBILES ENDGERÄT ZUR UNTERSTÜTZUNG MEHRERER SIMULTANER PDN-VERBINDUNGEN MIT DERSELBEN APN
PROCÉDÉ PERMETTANT DE PRENDRE EN CHARGE LA SÉLECTION DE CONNEXIONS PDN POUR UN TERMINAL MOBILE, ET TERMINAL MOBILE

(30) Priority: 12.02.2010 EP 10001467
(43) Date of publication of application: 19.12.2012
(73) Proprietor: NEC Corporation, Tokyo 108-8001 (JP)
(72) Inventor: TALEB, Tarik, 69126 Heidelberg (DE); SCHMID, Stefan, 69118 Heidelberg (DE)
(74) Representative: Patent- und Rechtsanwälte Ullrich & Naumann
(86) International application number: PCT/EP2011/000574
(87) International publication number: WO 2011/098249

(56) References cited:
- US-A1- 2006 221 986
- ERICSSON: "Analysis of handover scenarios", 3GPP DRAFT; S2-082604-DP-HO_CLEANUP, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Jeju; 20080401, 1 April 2008 (2008-04-01), XP050264904,
- NOKIA SIEMENS NETWORKS ET AL: "PDN GW, Serving GW, MME and SGSN selection", 3GPP DRAFT; S2-073088_S2-072930 REV3, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Orlando; 20070726, 26 July 2007 (2007-07-26), XP050260530,
- NOKIA SIEMENS NETWORKS: "Clarification on PDN GW selection for S2c", 3GPP DRAFT; 23402_CR0302R2_(REL-8)_S2-084335(REV3533_P GWSELECTIONS2C)2, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. TSG SA, no. Prague, Czech Republic; 20080515, 15 May 2008 (2008-05-15), XP050211157,
- CHINA MOBILE: "Select the same PDN GW when simutaneous multiple PDN Connections are used for an APN", 3GPP DRAFT; 23401_CR0352R1_(REL-8)_S2-084272 PDN GW SELECTION WHEN SIMUTANEOUS MULTPLE PDN CONNECTIONS ARE USED, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. TSG SA, no. Prague, Czech Republic; 20080514, 14 May 2008 (2008-05-14), XP050211092,

## Description

The present invention relates to a method for supporting selection of PDN connections for a mobile terminal, wherein said mobile terminal is connected to an access point using a radio access technology, and wherein said mobile terminal is in active mode having at least one ongoing session to an APN via a PDN gateway - first PDN gateway -.

Furthermore, the present invention relates to a mobile terminal with PDN connection selection support, wherein said mobile terminal is connected to an access point using a radio access technology, and wherein said mobile terminal is in active mode having at least one ongoing session to an APN via a PDN gateway - first PDN gateway -.

Typically, in network-based mobility networks, a mobility management function decides which gateway shall handle a specific mobile terminal, e.g. a User Equipment (UE) in the terminology of Evolved Packet Systems (EPS). For instance, in EPS networks such mobility management function, which is responsible for handover execution decisions, resides in a network component denoted MME (Mobility Management Entity). More specifically, whenever a UE requests initiation of a new session to an APN (Access Point Name), the MME selects a PDN (Packet Data Network) gateway for the UE via which the respective PDN connection has to be established.

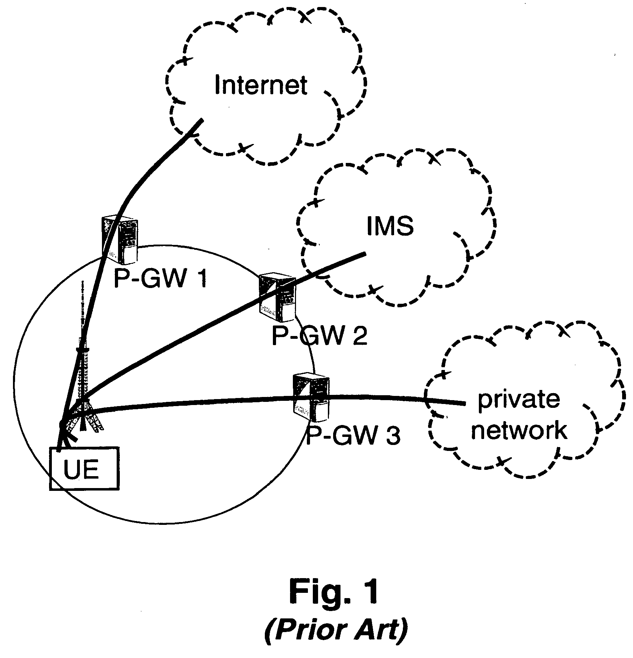

In recent years the concept of supporting multiple PDN connections of a UE has gained more and more importance. In current solutions, a UE, supporting multiple APNs, may have different PDN connections (corresponding to different IP addresses), each associated with a different APN (e.g., Internet, IMS, etc). The typical scenario reflecting this situation is illustrated in Fig. 1. There, a UE being connected to a base station is running different PDN connections. Via PDN-Gateway P-GW1 the UE is associated with the Internet, via P-GW2 the UE is associated with IMS (IP Multimedia Subsystem), and via P-GW3 the UE is associated with a private network.

While the different PDN connections established by the UE are directed to different APNs, according to current standards it is not supported that a UE has multiple PDN connections over the same radio technology to the same APN. For instance, current standard 3GPP 24.301 specifies in section 6.5.1.4 different situations in which requests from UEs for PDN connectivity are not accepted by the network. One reason for not accepting such request is that multiple PDN connections for a given APN are not allowed (specified in #55). Furthermore, in section 6.5.1.6 abnormal cases on the network side are specified, among them the case in which the network receives a PDN connectivity request message with the same combination of APN and PDN type as an already existing PDN connection.

Generally, when a UE is using a PDN connection to access a particular APN, the relevant PDN gateway (for the APN in question) does not change until the UE or the network disconnects the PDN connection. To avoid service disruption, P-GW relocation is only feasible during idle mobility, as existing PDN connections are simply torn down and re-established towards the target P-GW. As a consequence, as long as the UE has a PDN connection to access a particular APN (i.e., being in active mode), the UE - according to the sate-of-the-art - will always use the same P-GW to set up any new sessions to the same APN.

The document by Ericsson: "Analysis of handover scenarios", 3GPP TSG SA WG2 Meeting #64, Jeju Island, Korea, 7-11 April 2008, TD S2-082604 is about management of handover between 3GPP and non-3GPP accesses. Specifically, the document describes that a UE may have a PDN connection with ongoing IP sessions via a 3GPP access and then performs handover to a non-3GPP access and gets a new PDN connection via the non-3GPP access even if a PDN connection exists in the old access. Thus, the UE may establish multiple PDN connections by using different radio technologies for each of the PDN connections.

US 2006/0221986 A1 discloses a method for selecting, in a communications system, a packet data gateway node or function for a mobile user station. The method employs a packet data gateway functional selection means that is adapted to use a number of information parameters contained in a context set up message to select a packet data gateway, and it is adapted to forward the context set up message to the selected packet data gateway node or packet data gateway function.

The document by Nokia Siemens Networks et al.: "PDN GW, Serving GW, MME and SGSN selection", 3GPP TSG SA WG2 Architecture - S2#58, Orlando, FL, USA, 25-29 June 2007, S2-073088 is a contribution that provides further definitions for PDN GW, and Serving GW, MME and 2G/3G SGSN selection. Specifically, this contribution proposes that MME selects the Serving GW in order to allow for an optimized selection and use of network resources, e.g. including the possibility to allocate collocated or geographically close Serving and PDN GWs.

In a recent proposal by Hitachi (3GPP TSG SA WG2 Meeting #77, S2-100408), it was suggested migrating on-going PDN connections from a "soon-to-be-congested" P-GW to a less congested one. Intuitively, however, this operation is too complex and may have serious impact on service continuity.

It is therefore an objective of the present invention to improve and further develop a method and a mobile terminal of the initially described type in such a way that, by employing means that are readily to implement, the support of mobile terminals that are interested in launching new sessions to a particular APN is improved with regard to establishing new optimized PDN connections for the new sessions, while at the same time the on-going PDN connections and the corresponding ongoing sessions of the mobile terminal to the same APN are not compromised.

In accordance with the invention, the aforementioned objective is accomplished by a method comprising the features of claim 1. According to this claim such a method is characterized in the steps of
monitoring whether a more suitable PDN gateway - second PDN gateway - than said first PDN gateway becomes available for said mobile terminal,
if available, establishing any new sessions of said mobile terminal to said APN via an access point using said radio access technology by establishing a new PDN connection to said second PDN gateway, while keeping already ongoing sessions associated with the existing PDN connection to said first PDN gateway.

Furthermore, the above mentioned objective is accomplished by a mobile terminal comprising the features of claim 15. According to this claim such a mobile terminal is characterized in that it includes
reception means for collecting information whether a more suitable PDN gateway - second PDN gateway - than said first PDN gateway becomes available, and
decision means for establishing any new sessions to said APN via an access point using said radio access technology by establishing a new PDN connection to said second PDN gateway, if available, while keeping already ongoing sessions associated with the existing PDN connection to said first PDN gateway.

According to the present invention it has first been recognized that basically there is a need for mobile stations to launch multiple sessions to the same APN. Furthermore, it has been recognized that using an existing PDN connection to the APN in question for new sessions might be disadvantageous in several aspects. As a solution the present invention proposes the following mechanism: When for a mobile terminal that accesses a particular APN using a given PDN connection, a more optimized/suitable PDN gateway becomes available, for instance as a result of a handoff performed by the mobile terminal to a new access point, the mobile terminal shall set up a new PDN connection to the more optimized PDN gateway when the UE wants to initiate new sessions to the same APN. Consequently, the present invention devises a mechanism that enables mobile terminals to establish another optimized PDN connection (e.g., upon a trigger from the network or when judged appropriate by the mobile terminal itself) to the same APN as the previous. As a matter of course, at the same time more than one PDN gateway that is more optimized/suitable than the first PDN gateway, i.e. the one being currently employed, may become available. Insofar, the term "second PDN gateway" is understood to possibly include a plurality of PDN gateways (e.g. a third, fourth, etc. PDN gateway), from which then e.g. the most optimized/suitable PDN gateway can be chosen. For instance, if the mobile terminal continues moving, it may always take the most optimal PDN gateway for new sessions, while the old sessions are kept on the PDN gateway where they very established.

Applying the method according to the present invention, i.e. adding "suitable" PDN connections for mobile terminals during active mobility that are used for new IP flows while maintaining the ongoing PDN connections, enables mobile terminals to always have optimized PDN connections. Typical scenarios in which the invention can be advantageously applied include, e.g., the scenario of a mobile terminal that travels a long-distance while keeping a long-lived session or, even more likely to occur, a scenario in the context of SIPTO (Selected IP Traffic Offload), if a nearby and less loaded PDN gateway becomes available. In any case, as a result the present invention has important benefits for the operator, in particular with respect to efficient load balancing, data traffic route optimization, service localization, efficient support of SIPTO (Selected IP Traffic Offload), savings in overall network resources, etc. However, it is to be noted that the present invention considers only mobile terminals that support multiple simultaneous PDN connections to the same APN.

With respect to an efficient and consistent determination of the degree of suitability of a PDN gateway it may be provided that certain parameters related to specific characteristics of the PDN gateway are taken into consideration. In particular, the degree of a suitability of a PDN gateway may be determined in terms of its capabilities, its load and/or its geographical proximity relative to the mobile terminal. In this context it may be provided that a plurality of different parameters is considered and weighted according to predefined policies, which may be specified by the network operator. For instance, a PDN gateway having only little load may be regarded more suitable than a rather heavy loaded PDN Gateway, although its distance to the mobile terminal might be longer.

According to a preferred embodiment it may be provided that the mobile terminal, having performed a handover to another access point, performs an active search for a more suitable PDN gateway. Although even in cases in which the mobile terminal remains in the same area (i.e. in the same cell) the current PDN gateway employed by the mobile terminal may lose its status of being the most suitable one, i.e., in case the PDN gateway gets heavily loaded. Insofar, performing an active scan after handover proves to be an effective means for the mobile terminal with respect to establishing any new sessions using a PDN connection to an optimal PDN gateway.

Generally, it may be provided that the monitoring of the availability of more suitable PDN gateways is performed by a Mobility Management Entity, in accordance with the respective EPS notation briefly denoted MME hereinafter. MME may apply different mechanisms to check whether there are any more suitable PDN gateways available for a specific mobile terminal. In this context it is assumed that the MME has specific gateway selection mechanisms. Further, it is assumed that the MME has prior knowledge on information related to PDN gateways (e.g., load) in real time. For instance, MME may use the Tracking Area Update (TAU) procedure to indicate to the UE (in the response) that a more optimal PDN gateway is available. Additionally or alternatively, MME may use S5/S11 interfaces for exchange of information related to the load of possible PDN gateways.

In case the MME has figured out that one or more PDN gateways are available for the mobile terminal which are more suitable than the one currently employed by the mobile terminal, MME may indicate this to the mobile terminal, preferably by using NAS (None-Access Stratum) signaling (e.g., Handoff command messages). In a specific embodiment indication includes a flag, based on which the mobile terminal establishes a new optimized PDN connection when it wants to initiate a new session to the APN. Furthermore, the indication can be an exquisite indication of the IP address/IP addresses of one or more PDN gateways the MME has identified as being more suitable.

Advantageously, when the mobile terminal wants to set up a new session to an APN with which it has already an ongoing PDN connection, it queries the MME (e.g., using NAS signaling) whether it should use the existing PDN connection or consider a new one. Compared to the MME-initiated solution described above, a solution initiated by the mobile terminal may sometimes generate unnecessary queries from the mobile terminal to the MME. However, apart from the modifications required for allowing multiple PDN connections to the same APN, no further modifications at the network level are required. Querying MME can be done based on different parameters. For instance, it may be provided that the mobile terminal queries the MME for a suitable PDN gateway to use whenever it wishes to establish a new PDN connection to the APN. Alternatively, with the objective of reducing signaling overhead, it may be provided that queries are sent to the MME only in case a specific event occurred after the mobile terminal had established its most recent PDN connection to the APN. For instance, the specific event may include the mobile terminal having performed a number of handoffs, having moved a certain distance, and/or having entered a new tracking/service area. Other policies are possible, for instance sending queries only after particular period of time or after the mobile terminal having entered a specific area during a specific time.

According to another preferred embodiment, apart from initiating identification of optimal PDN gateways either by the mobile terminal itself or by the MME, it may be provided that a mobile terminal is triggered to consider a more optimal PDN gateway for any new session upon the current PDN gateway's initiative. For instance, when the current/first PDN gateway (i.e. the PDN Gateway via which the mobile terminal has at least one ongoing session to the APN) realizes that the mobile terminal is more suitably serviced by another PDN gateway, the current/first PDN gateway may simply reject any incoming requests for any new sessions. In particular the rejection of requests may be realized by the current/first PDN gateway sending an error message to the mobile terminal. This operation requires, however, that PDN gateways have the ability to filter traffic per each flow/session of a specific network protocol, e.g. Internet Protocol (IP), and that they have knowledge on the optimality of a set of other PDN gateways, in particular of the neighboring ones. This information can be exchanged among neighboring PDN gateways using a new interface between the PDN gateways, it can be distributed by O&M (Operation & Management), or assuming it is available at MME (aggregated via S5/S11 interfaces as mentioned earlier), this information can be distributed by the MME.

Advantageously, when the current/first PDN gateway (i.e. the PDN Gateway via which the mobile terminal has at least one ongoing session to the APN) starts running under predefined conditions, it notifies the mobile terminal to establish any new PDN connections to the APN via other PDN gateways. Such notification may be sent to all mobile stations that have ongoing connections with the PDN gateway. One of the predefined conditions, which may be specified by the network operator, may e.g. be related to the load of the PDN gateway that exceeds a certain threshold. In a specific embodiment the notification is realized by using S5/S11 interfaces and NAS signaling via the MME. Alternatively, new and specific signaling messages, specifically designed for this purpose, may be employed. In another specific embodiment the notification is realized by setting a flag either in data packets or in existing signaling messages or in both, which are exchanged between the PDN Gateway and the mobile terminal, for instance by using PCO (Protocol Configuration Options).

According to another preferred embodiment it may be provided that the mobile terminal binds new IP sessions (including all kinds of IP flows and/or connections) when they are established with their corresponding PDN gateways. A straightforward solution for such binding would be mapping "IP address of destination peer, application type, and protocol types" with the PDN Gateway. In this context it is important to note that a session, which is defined based on the IP address of the destination peer, application type, and underlying protocol types, may have more than one protocol type, e.g., SIP (Session Initiation Protocol), RTP (Real-time Transport Protocol), and RTCP (RealTime Control Protocol). By so doing, mobile terminals always remember which of their IP flow/connection/session uses which PDN connection. When all IP flows/connections/sessions of a mobile terminal associated with a particular PDN connection finish, the mobile terminal may trigger the release of the PDN connection in question in order to release the respective resources.

There are several ways how to design and further develop the teaching of the present invention in an advantageous way. To this end, it is to be referred to the patent claims subordinate to patent claim 1 on the one hand, and to the following explanation of a preferred example of an embodiment of the invention illustrated by the drawing on the other hand. In connection with the explanation of the preferred example of an embodiment of the invention by the aid of the drawing, generally preferred embodiments and further developments of the teaching will be explained. In the drawing
- Fig. 1: is a schematic view illustrating a scenario of a UE having established a plurality of PDN connections according to prior art,
- Fig. 2a: is a schematic view illustrating a UE having established a first PDN connection according to prior art,
- Fig. 2b: is a schematic view illustrating the scenario of Fig. 2a with the UE having established an additional session according to prior art, and
- Fig. 3: is a schematic view illustrating a scenario with optimized PDN connection selection support according to an embodiment of the present invention.

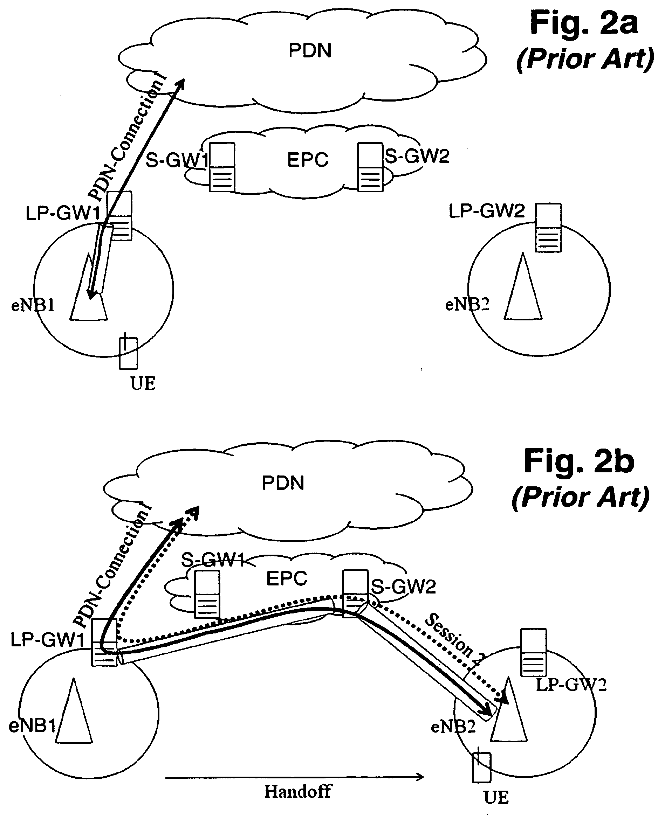

Fig. 2a illustrates a scenario according to prior art in which a UE (User Equipment) that is supposed to support multiple APNs is located within the coverage area of access point eNB1 (indicated by the circle). The UE, which is operating in active mode and which has established a connection to eNB1, has an ongoing session with PDN, which is denoted PDN-connection1. As illustrated by the arrow, PDN-connection1 is established via PDN gateway LP-GW1 (local P-GW1).

Fig. 2b illustrates the scenario of Fig. 2a at a later point in time and after the UE having performed handoff from eNB1 to eNB2. When connected to eNB2, the UE at certain time wants to initiate a new session - session 2 - to the same APN, i.e. to the depicted PDN, while keeping the old one still active. Although after the handoff a new and more suitable PDN Gateway (e.g. in terms of load and/or geographical proximity to the UE) becomes available, which is LP-GW2, the UE continues to use the old PDN gateway (LP-GW1) for receiving data of new session 2. As illustrated both for the signaling (dotted line arrow) and for the data (solid line arrow) the connection between the UE and the PDN is established via eNB2, a S-GW (Serving Gateway) of the EPC (Evolved Packet Core) and LP-GW1. This is due to the fact that according to prior art there is no possibility for a UE to change a PDN connection to a particular APN unless the UE becomes in idle mobility. A change of the PDN gateway, in case of Fig. 2b from LP-GW1 to LP-GW2, would result in the old PDN connection simply being torn down.

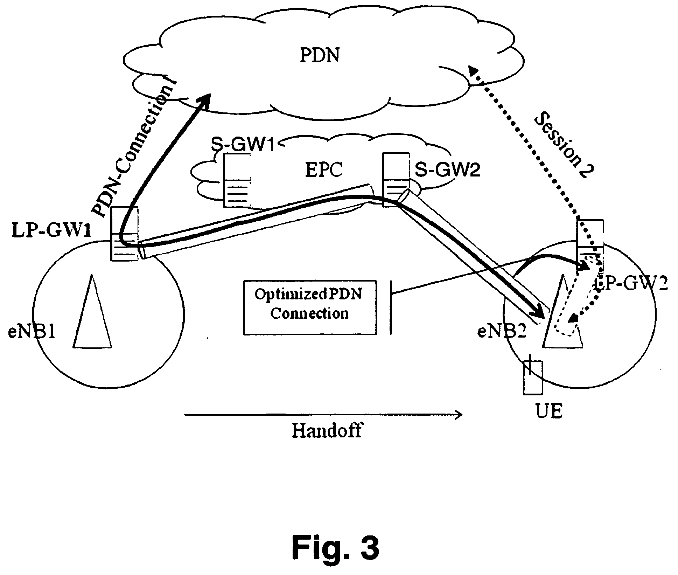

Fig. 3 schematically illustrates a scenario that implements a method according to an embodiment of the present invention. The underlying architecture is the same as in Figs. 2a and 2b, in which the UE, when connected to eNB1, established PDN-connection1 to the depicted PDN via LP-GW1. At a certain point in time the UE performs a handoff from eNB1 to eNB2. The handoff results in that the data of the session of PDN-connection1 are directed via LP-GW1 and S-GW2, as indicated by the solid line arrow.

In this situation the UE wishes to establish a new session with the same PDN. In accordance with the present invention and in contrast to the scenario illustrated in Fig. 2b, the UE comprises reception means for collecting information whether a more suitable PDN gateway than the one currently employed becomes available. Furthermore, the UE includes decision means for establishing any new session with the same PDN via a PDN gateway as optimal as possible, while keeping any ongoing sessions using the already existing PDN connection.

In the embodiment of Fig. 3, a monitoring process yields that for the UE, after having performed the handoff, LP-GW2 is a more suitable PDN gateway than LP-GW1, since the geographical distance of LP-GW2 to the UE is much smaller. Therefore, the UE establishes a new PDN connection via the new PDN gateway LP-GW2 and launches any new session to the APN using the new PDN connection, as indicated by the dotted line arrow. The on-going session will keep using the old PDN connection, i.e. the old session using the old PDN connection will not be compromised and will be ongoing till it finishes. Then the old PDN connection will be torn down following state-of-the-art procedures.

In Fig. 3, the method according to an embodiment of the present invention is applied to a scenario whereby the UE performs handoff to an area where another optimal PDN gateway becomes available. However, the solution can be also applied even if the UE remains in the same area (i.e., the same cell) and the PDN gateway it is connecting with loses its optimality (e.g., becomes heavily loaded) and another optimal PDN gateway (e.g., a less loaded one) is available.

Furthermore, in the embodiment illustrated in connection with Fig. 3, the change to a more suitable PDN gateway for establishing any new session was initiated by the UE itself. However, according to another embodiment it may be the MME of the network that triggers a UE to consider a more optimal PDN gateway for any new session. According to still another embodiment the process of considering more suitable PDN gateways may be initiated by the PDN gateway that a UE is currently using in connection with an existing session to an APN. For instance, when the currently employed PDN gateway realizes that the UE is to be better serviced by another PDN gateway, it may simply reject any requests for any new sessions. Moreover, when the currently employed PDN gateway starts running under specific conditions, in particular when it starts exceeding a predefined load threshold, it may notify a selected set of UEs, which have ongoing connections with the PDN gateway, to establish new PDN connections with other PDN gateways to accommodate new sessions.

Many modifications and other embodiments of the invention set forth herein will come to the mind of the one skilled in the art to which the invention pertains, having the benefit of the teachings presented in the foregoing description and the associated drawings. Therefore, it is to be understood that the invention is not to be limited to the specific embodiments disclosed and that modifications and other embodiments are intended to be included within the scope of the appended claims. Although specific terms are employed herein, they are used in a generic and descriptive sense only and not for purposes of limitation.

## Claims

1. Method for supporting selection of PDN connections for a mobile terminal, wherein said mobile terminal is connected to an access point using a radio access technology, and wherein said mobile terminal is in active mode having at least one ongoing session to an APN via a PDN gateway - first PDN gateway -,
**characterized in** the steps of
monitoring whether a more suitable PDN gateway - second PDN gateway - than said first PDN gateway becomes available for said mobile terminal,
if available, establishing any new sessions of said mobile terminal to said APN via an access point using said radio access technology by establishing a new PDN connection to said second PDN gateway, while keeping already ongoing sessions associated with the existing PDN connection to said first PDN gateway.

2. Method according to claim 1, wherein the degree of suitability of a PDN gateway is determined in terms of its capabilities, its load and/or its geographical proximity relative to said mobile terminal.

3. Method according to claim 1 or 2, wherein said mobile terminal, after having performed a handover to another access point, performs an active search for a more suitable PDN gateway.

4. Method according to any of claims 1 to 3, wherein said monitoring of the availability of more suitable PDN gateways is performed by a Mobility Management Entity (MME).

5. Method according to any of claims 1 to 4, wherein said Mobility Management Entity (MME) indicates to said mobile terminal, preferably by using, NAS, Non-Access Stratum signaling, that one or more suitable PDN gateways are available for said mobile terminal.

6. Method according to claim 5, wherein said indication includes a flag and/or an explicit indication of the IP address/IP addresses of said one or more suitable PDN gateways.

7. Method according to any of claims 1 to 6, wherein said mobile terminal, whenever it wishes to establish a new session to said APN, queries said Mobility Management Entity (MME) for a suitable PDN gateway to use.

8. Method according to claim 7, wherein said query is sent to said Mobility Management Entity (MME) only in case a specific event occurred after said mobile terminal had established its most recent PDN connection to said APN.

9. Method according to claim 8, wherein said specific event includes said mobile terminal having performed a number of handoffs, having moved a certain distance and/or having entered a new tracking/service area.

10. Method according to any of claims 1 to 9, wherein said first PDN gateway, in case it realizes that said mobile terminal is more suitably serviced by another PDN gateway, rejects any requests for any new sessions from said mobile terminal.

11. Method according to claim 10, wherein the rejection of requests is realized by said first PDN gateway sending an error message to said mobile terminal.

12. Method according to any of claims 1 to 11, wherein said first PDN gateway, in case it starts running under predefined conditions, notifies said mobile terminal to establish any new sessions to said APN via other PDN gateways.

13. Method according to claim 12, wherein said notification is realized by using S5/S11 interfaces and NAS signaling via a Mobility Management Entity (MME), and/or
wherein said notification is realized by setting a flag in data packets and/or in existing signaling messages exchanged between said first PDN gateway and said mobile terminal.

14. Method according to any of claims 1 to 13, wherein said mobile terminal binds the sessions it has established to said APN with the corresponding PDN gateway, and/or
wherein said mobile terminal triggers the release of a PDN connection in case all IP flows and/or sessions associated with the respective PDN gateway are finished.

15. Mobile terminal with PDN connection selection support, wherein said mobile terminal is connected to an access point using a radio access technology, and wherein said mobile terminal is in active mode having at least one ongoing session to an APN via a PDN gateway - first PDN gateway -,
**characterized in that** said mobile terminal includes
reception means for collecting information whether a more suitable PDN gateway - second PDN gateway - than said first PDN gateway becomes available, and
decision means for establishing any new sessions to said APN via an access point using said radio access technology by establishing a new PDN connection to said second PDN gateway, if available, while keeping already ongoing sessions associated with the existing PDN connection to said first PDN gateway.

## Patentansprüche

1. Verfahren zur Unterstützung der Auswahl von PDN-Verbindungen für ein mobiles Endgerät, wobei das mobile Endgerät unter Verwendung einer Funkzugangstechnologie mit einem Zugangspunkt verbunden ist, und wobei sich das mobile Endgerät im aktiven Modus befindet und über ein PDN-Gateway - erstes PDN-Gateway - mindestens eine laufende Sitzung zu einem APN hat,
**gekennzeichnet durch** die Schritte
Überwachen, ob ein geeigneteres PDN-Gateway - zweites PDN-Gateway - als das erste PDN-Gateway für das mobile Endgerät verfügbar wird,
falls verfügbar, Herstellen von neuen Sitzungen des mobilen Endgeräts zu dem APN über einen Zugangspunkt unter Verwendung der Funkzugangstechnologie, indem eine neue PDN-Verbindung zu dem zweiten PDN-Gateway hergestellt wird, während bereits laufende Sitzungen, die zu der bestehenden PDN-Verbindung zu dem ersten PDN Gateway gehören, aufrechterhalten werden.

2. Verfahren nach Anspruch 1, wobei der Grad der Eignung eines PDN-Gateways im Hinblick auf seine Leistungsfähigkeit, seine Auslastung und/oder seine geografische Nähe relativ zu dem mobilen Endgerät bestimmt wird.

3. Verfahren nach Anspruch 1 oder 2, wobei das mobile Endgerät eine aktive Suche nach einem geeigneteren PDN-Gateway durchführt, nachdem es ein Handover zu einem anderen Zugangspunkt durchgeführt hat.

4. Verfahren nach einem der Ansprüche 1 bis 3, wobei das Überwachen der Verfügbarkeit von geeigneteren PDN Gateways von einer Mobility Management Entity (MME) durchgeführt wird.

5. Verfahren nach einem der Ansprüche 1 bis 4, wobei die Mobility Management Entity (MME) dem mobilen Endgerät anzeigt, vorzugsweise unter Verwendung von NAS, Non-Access Stratum, Signalisierung, dass ein oder mehrere geeignetere PDN Gateways für das mobile Endgerät verfügbar sind.

6. Verfahren nach Anspruch 5, wobei das Anzeigen einen Flag und/oder eine explizite Angabe der IP-Adresse/IP-Adressen des einen oder der mehreren geeigneteren PDN Gateways umfasst.

7. Verfahren nach einem der Ansprüche 1 bis 6, wobei das mobile Endgerät, immer wenn es eine neue Sitzung zu dem APN herzustellen wünscht, bei der Mobility Management Entity (MME) ein geeignetes PDN-Gateway, das es verwenden kann, erfragt.

8. Verfahren nach Anspruch 7, wobei die Anfrage nur dann an die Mobility Management Entity (MME) gesendet wird, falls ein bestimmtes Ereignis eingetreten ist, nachdem das mobile Endgerät seine jüngste PDN-Verbindung mit dem APN hergestellt hat.

9. Verfahren nach Anspruch 8, wobei das spezifische Ereignis umfasst, dass das mobile Endgerät eine Anzahl von Handoffs durchgeführt hat, sich eine bestimmte Distanz bewegt hat und/oder in einen neuen Tracking-/Service-Bereich eingetreten ist.

10. Verfahren nach einem der Ansprüche 1 bis 9, wobei das erste PDN-Gateway in dem Fall, dass es erkennt, dass das mobile Endgerät in geeigneterer Weise von einem anderen PDN-Gateway bedient wird, alle Anfragen für neue Sitzungen von dem mobilen Endgerät zurückweist.

11. Verfahren nach Anspruch 10, wobei die Zurückweisung von Anfragen realisiert wird, indem das erste PDN-Gateway eine Fehlernachricht an das mobile Endgerät sendet.

12. Verfahren nach einem der Ansprüche 1 bis 11, wobei das erste PDN-Gateway für den Fall, dass es beginnt, unter vordefinierten Bedingungen zu arbeiten, das mobile Endgerät benachrichtigt, alle neuen Sitzungen zu dem APN über andere PDN Gateways herzustellen.

13. Verfahren nach Anspruch 12, wobei die Benachrichtigung unter Verwendung von S5/S11-Schnittstellen und NAS-Signalisierung über eine Mobility Management Entity (MME) realisiert wird, und/oder
wobei die Benachrichtigung durch Setzen eines Flags in Datenpaketen und/oder in vorhandenen Signalisierungsnachrichten, die zwischen dem ersten PDN-Gateway und dem mobilen Endgerät ausgetauscht werden, realisiert wird.

14. Verfahren nach einem der Ansprüche 1 bis 13, wobei das mobile Endgerät die Sitzungen, die es zu dem APN aufgebaut hat, mit dem entsprechenden PDN-Gateway bindet, und/oder
wobei das mobile Endgerät die Auflösung einer PDN-Verbindung triggert, falls alle IP-Flüsse und/oder Sitzungen, die mit dem jeweiligen PDN-Gateway assoziiert sind, beendet sind.

15. Mobiles Endgerät mit Unterstützung der Auswahl von PDN-Verbindungen, wobei das mobile Endgerät unter Verwendung einer Funkzugangstechnologie mit einem Zugangspunkt verbunden ist, und wobei sich das mobile Endgerät im aktiven Modus befindet und über ein PDN-Gateway - erstes PDN-Gateway - mindestens eine laufende Sitzung zu einem APN hat,
**dadurch gekennzeichnet, dass** das mobile Endgerät folgendes aufweist
Empfangsmittel zum Sammeln von Informationen, ob ein PDN-Gateway - zweites PDN-Gateway -, das geeigneter ist als das erste PDN-Gateway, für das mobile Endgerät verfügbar wird, und
Entscheidungsmittel zum Herstellen von neuen Sitzungen zu dem APN über einen Zugangspunkt unter Verwendung der Funkzugangstechnologie, indem eine neue PDN-Verbindung zu dem zweiten PDN-Gateway, falls verfügbar, hergestellt wird, während bereits laufende Sitzungen, die zu der bestehenden PDN-Verbindung zu dem ersten PDN-Gateway gehören, aufrechterhalten werden.

## Revendications

1. Procédé de prise en charge de la sélection de connexions de réseau PDN pour un terminal mobile, dans lequel ledit terminal mobile est connecté à un point d'accès au moyen d'une technologie d'accès radio, et dans lequel ledit terminal mobile est en mode actif avec au moins une session en cours au niveau d'un nom APN par l'intermédiaire d'une passerelle de réseau PDN, à savoir une première passerelle de réseau PDN,
**caractérisé par** les étapes ci-dessous consistant à :
contrôler si une passerelle de réseau PDN, à savoir une seconde passerelle de réseau PDN, plus adaptée que ladite première passerelle de réseau PDN, devient disponible pour ledit terminal mobile ;
le cas échéant, établir des nouvelles sessions quelconques dudit terminal mobile au niveau dudit nom APN par l'intermédiaire d'un point d'accès, en utilisant ladite technologie d'accès radio, en établissant une nouvelle connexion de réseau PDN au niveau de ladite seconde passerelle de réseau PDN, tout en conservant des sessions déjà en cours associées à la connexion de réseau PDN existante au niveau de ladite première passerelle de réseau PDN.

2. Procédé selon la revendication 1, dans lequel le degré de pertinence d'une passerelle de réseau PDN est déterminé en fonction de ses capacités, de sa charge et/ou de sa proximité géographique relativement audit terminal mobile.

3. Procédé selon la revendication 1 ou 2, dans lequel ledit terminal mobile, après avoir mis en oeuvre un transfert intercellulaire vers un autre point d'accès, met en oeuvre une recherche active d'une passerelle de réseau PDN plus adaptée.

4. Procédé selon l'une quelconque des revendications 1 à 3, dans lequel ledit contrôle de la disponibilité de passerelles de réseau PDN plus adaptées est mis en oeuvre par une entité de gestion de la mobilité (MME).

5. Procédé selon l'une quelconque des revendications 1 à 4, dans lequel ladite entité de gestion de la mobilité (MME) indique audit terminal mobile, de préférence en utilisant une signalisation de strate de non-accès, NAS, qu'une ou plusieurs passerelles de réseau PDN adaptées sont disponibles pour ledit terminal mobile.

6. Procédé selon la revendication 5, dans lequel ladite indication inclut un drapeau et/ou une indication explicite de la ou des adresses IP de ladite une ou desdites plusieurs passerelles de réseau PDN adaptées.

7. Procédé selon l'une quelconque des revendications 1 à 6, dans lequel ledit terminal mobile, dès lors qu'il souhaite établir une nouvelle session au niveau dudit nom APN, interroge ladite entité de gestion de la mobilité (MME) en ce qui concerne l'utilisation d'une passerelle de réseau PDN adaptée.

8. Procédé selon la revendication 7, dans lequel ladite interrogation est envoyée à ladite entité de gestion de la mobilité (MME) uniquement dans le cas où un événement spécifique est survenu après que ledit terminal mobile a établi sa connexion de réseau PDN la plus récente au niveau dudit nom APN.

9. Procédé selon la revendication 8, dans lequel ledit événement spécifique inclut : la mise en oeuvre d'un nombre de transferts par le terminal mobile, le déplacement du terminal mobile sur une certaine distance et/ou l'entrée du terminal mobile dans une nouvelle zone de suivi/service.

10. Procédé selon l'une quelconque des revendications 1 à 9, dans lequel ladite première passerelle de réseau PDN, dès lors qu'elle réalise que ledit terminal mobile est desservi de manière plus adaptée par une autre passerelle de réseau PDN, rejette toutes les demandes de nouvelles sessions quelconques en provenance dudit terminal mobile.

11. Procédé selon la revendication 10, dans lequel le rejet de demandes est mis en oeuvre par l'envoi, par ladite première passerelle de réseau PDN, d'un message d'erreur audit terminal mobile.

12. Procédé selon l'une quelconque des revendications 1 à 11, dans lequel ladite première passerelle de réseau PDN, dès lors qu'elle commence à fonctionner dans des conditions prédéfinies, notifie audit terminal mobile d'établir de nouvelles sessions quelconques au niveau dudit nom APN par l'intermédiaire d'autres passerelles de réseau PDN.

13. Procédé selon la revendication 12, dans lequel ladite notification est mise en oeuvre en utilisant des interfaces S5/S11 et une signalisation de strate NAS par l'intermédiaire d'une entité de gestion de la mobilité (MME) ; et/ou
dans lequel ladite notification est mise en oeuvre en définissant un drapeau dans des paquets de données et/ou dans des messages de signalisation existants échangés entre ladite première passerelle de réseau PDN et ledit terminal mobile.

14. Procédé selon l'une quelconque des revendications 1 à 13, dans lequel ledit terminal mobile lie les sessions qu'il a établies au niveau dudit nom APN à la passerelle de réseau PDN correspondante ; et/ou
dans lequel ledit terminal mobile déclenche la libération d'une connexion de réseau PDN dès lors que toutes les sessions et/ou tous les flux IP associé(e)s à la passerelle de réseau PDN respective sont achevé(e)s.

15. Terminal mobile offrant une prise en charge de la sélection de connexions de réseau PDN, dans lequel ledit terminal mobile est connecté à un point d'accès au moyen d'une technologie d'accès radio, et dans lequel ledit terminal mobile est en mode actif avec au moins une session en cours au niveau d'un nom APN par l'intermédiaire d'une passerelle de réseau PDN, à savoir une première passerelle de réseau PDN,
**caractérisé en ce que** ledit terminal mobile inclut :
un moyen de réception pour collecter des informations indiquant si une passerelle de réseau PDN, à savoir une seconde passerelle de réseau PDN, plus adaptée que ladite première passerelle de réseau PDN, devient disponible ; et
un moyen de décision pour établir des nouvelles sessions quelconques au niveau dudit nom APN par l'intermédiaire d'un point d'accès, en utilisant ladite technologie d'accès radio, en établissant une nouvelle connexion de réseau PDN au niveau de ladite seconde passerelle de réseau PDN, le cas échéant, tout en conservant des sessions déjà en cours associées à la connexion de réseau PDN existante au niveau de ladite première passerelle de réseau PDN.
